**Europäisches Patentamt**

**European Patent Office**

**Office européen des brevets**

(11) Veröffentlichungsnummer : **0 098 319
B1**

# (12) EUROPÄISCHE PATENTSCHRIFT

(45) Veröffentlichungstag der Patentschrift :
26.03.86

(21) Anmeldenummer : **82105964.9**

(22) Anmeldetag : **03.07.82**

(51) Int. Cl.⁴ : **G 03 F   3/08, H 04 N   1/32**

(54) **Verfahren und Anordnung zur Kontraststeigerung.**

(43) Veröffentlichungstag der Anmeldung :
**18.01.84 Patentblatt 84/03**

(45) Bekanntmachung des Hinweises auf die Patenterteilung : **26.03.86 Patentblatt 86/13**

(84) Benannte Vertragsstaaten :
**AT BE CH DE FR GB IT LI NL SE**

(56) Entgegenhaltungen :
**DE-A- 2 922 091
DE-B- 1 269 157
DE-B- 2 226 990
GB-A- 1 546 359
US-A- 3 170 032**

(73) Patentinhaber : **DR.-ING. RUDOLF HELL GmbH
Grenzstrasse 1-5
D-2300 Kiel 14 (DE)**

(72) Erfinder : **Hennig, Eberhard
Bundhorster Chaussee 3
D-2323 Ascheberg (DE)**

**0 098 319**

**Beschreibung**

Die Erfindung bezieht sich auf die elektronische Druckformherstellung mittels Graviergeräten und Scanner, insbesondere auf ein Verfahren und eine Anordnung zur Kontraststeigerung bei der Wiederaufzeichnung von Vorlagen.

Bei der elektronischen Druckformherstellung mittels Graviergeräten und Scannern werden die zu reproduzierende Vorlagen mit einem optoelektronischen Abtastorgan punkt- und zeilenweise abgetastet und das dabei gewonnene Bildsignal nach den Erfordernissen des Reproduktionsprozesses korrigiert. Das korrigierte Bildsignal steuert ein Aufzeichnungsorgan, welches die Wiederaufzeichnung der Vorlagen auf einem Aufzeichnungsmedium vornimmt.

Die zu reproduzierenden Vorlagen sind in den meisten Fällen eine Kombination aus Halbtonbildern und aus Schriftzeichen oder Strichelementen von grafischen Darstellungen. Sowohl Halbtonbilder als auch Schriftzeichen oder Strichelemente weisen Konturen auf, deren Reproduktion Schwierigkeiten bereitet.

Bereits bei der fotografischen Herstellung einer Filmvorlage wird der Kontrast an Konturen, insbesondere in feinen Details, gegenüber dem Original durch Unschärfe in den Filmschichten sowie durch Vergrößern oder Umkopieren gemindert. Hinzu kommt, daß das Auflösungsvermögen des optoelektronischen Abtastorgans durch Streulicht und durch die Unschärfe der Abtast-Objektive begrenzt ist, wodurch bei der Reproduktion an Konturen eine weitere Kontrastminderung eintritt, die das menschliche Auge als Unschärfe empfindet.

Es besteht daher die Notwendigkeit, den verminderten Kontrast bzw. die verminderte Bildschärfe bei der Druckformherstellung wieder herzustellen oder aus redaktionellen Gründen gegenüber dem Original sogar noch zu steigern.

Aus der US-PS 2 691 696 ist es bereits bekannt, zur Kontrast- bzw. Schärfesteigerung außer dem aktuellen Bildpunkt mit einer Bildpunkt-Blende auch sein Umfeld mit einer entsprechend größeren Umfeldblende abzutasten, das Differenzsignal aus Umfeldsignal und Bildsignal zu bilden und als Korrektursignal dem Bildsignal zur Aufsteilung in wählbarer Stärke zu überlagern. Diese Maßnahme, die der Unscharfmaskierung in der fotografischen Reproduktionstechnik entspricht, führt zur Verbesserung des Detailkontrastes bzw. der Bildschärfe an einer Kontur oder Umriß, da in unmittelbarer Umgebung eines Tonwertsprunges eine dunkle Bildpartie dunkler und eine helle Bildpartie heller als in einiger Entfernung vom Tonwertsprung aufgezeichnet wird.

Bei der bekannten Lösung ist die Amplitude des Korrektursignals nur von der Höhe des Tonwert- bzw. Bildsignalsprunges abhängig, so daß normalerweise harte Konturen von Strichelementen und Schriftzeichen (große Tonwertsprünge) überbetont, weiche Konturen in Halbtonbildern (kleine Tonwertsprünge) dagegen nur gering korrigiert werden.

In der Praxis kommt es aber gerade darauf an, insbesondere den Detailkontrast an weichen Konturen in Halbtonbildern anzuheben, da Schriftzeichen und Strichelemente ohnehin schärfer wiedergegeben werden. Um bei der bekannten Lösung überhaupt den gewünschten Effekt in Halbtonbildern erzielen zu können, muß dem Bildsignal das verfügbare Korrektursignal in voller Stärke überlagert werden. In diesem Falle entstehen aber beispielsweise an Spitzlichtern, an harten Konturen und um schwarze Schriftzeichen störende weiße Säume oder Ränder, die besonders auffällig sind, wenn z. B. schwarze Schrift in einem Grauton steht.

In der Praxis wäre es außerdem wünschenswert, an weichen Konturen von Halbtonbildern eine Kontrastanhebung mit großer Wirkungsbreite des Korrektursignals, dagegen an harten Konturen von Strichelementen und Schriftzeichen eine Kontrastanhebung mit kleiner Wirkungsbreite des Korrektursignals vorzunehmen, wodurch die störenden Säume und Ränder bereits erheblich reduziert würden.

Bei der bekannten Lösung ist die Wirkungsbreite des Korrektursignals bzw. die Breite der Bildsignal-Aufsteilung durch den Durchmesser der verwendeten Umfeld-Blende fest vorgegeben und kann nur durch eine entsprechende Blenden-Umschaltung geändert werden.

Die bekannte Lösung hat daher den Nachteil, daß sich die Kontrastanhebung hinsichtlich der Amplitude und der Wirkungsbreite des Korrektursignals entweder nur auf Halbton-Bereiche oder auf Strich-Bereiche der Vorlage optimieren läßt.

Es ist auch schon versucht worden, die bekannte Lösung durch Verzerren, Amplitudenbegrenzung oder durch eine unsymmetrische Behandlung des Korrektursignals sowie durch Beeinflussung des Korrektursignals in Abhängigkeit einer Schaltmaske zu verbessern (DE-PS 9 49 443, DE-PS 10 39 842 oder DE-PS 22 26 990), dennoch gibt es in der Praxis immer wieder Schwierigkeiten, solche störenden Ränder oder Säume zu vermeiden, oder zumindestens so zu reduzieren, daß sie nicht mehr stören.

Der im Anspruch 1 angegebenen Erfindung liegt daher die Aufgabe zugrunde, ein Verfahren und eine Anordnung bei der Wiederaufzeichnung von Vorlagen anzugeben, mit denen sowohl an Konturen in Halbtonbildern als auch an Schriftzeichen oder an Strichelementen eine optimale Kontrastanhebung bzw. Schärfesteigerung erzielt wird.

Die Erfindung wird im folgenden anhand der Figuren 1 bis 5 näher erläutert.

Es zeigen :

2

Figur 1 eine prinzipielle Schaltungsanordnung eines Bildreproduktionsgerätes ;
Figur 2 eine Darstellung verschiedener Umfeld-Bereiche ;
Figur 3 Signalverläufe ;
Figur 4 Signalverläufe ;
Figur 5 weitere Signalverläufe.

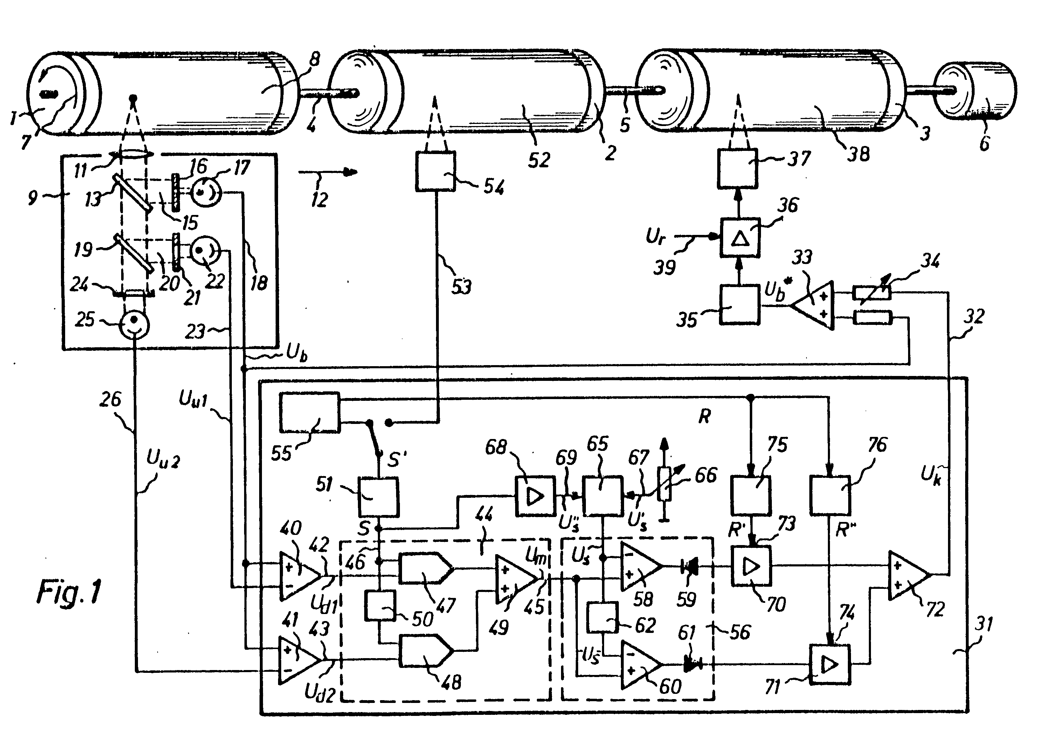

Fig. 1 zeigt eine prinzipielle Schaltungsanordnung eines Bildreproduktionsgerätes mit einer Korrektur-Stufe zur Kontraststeigerung.

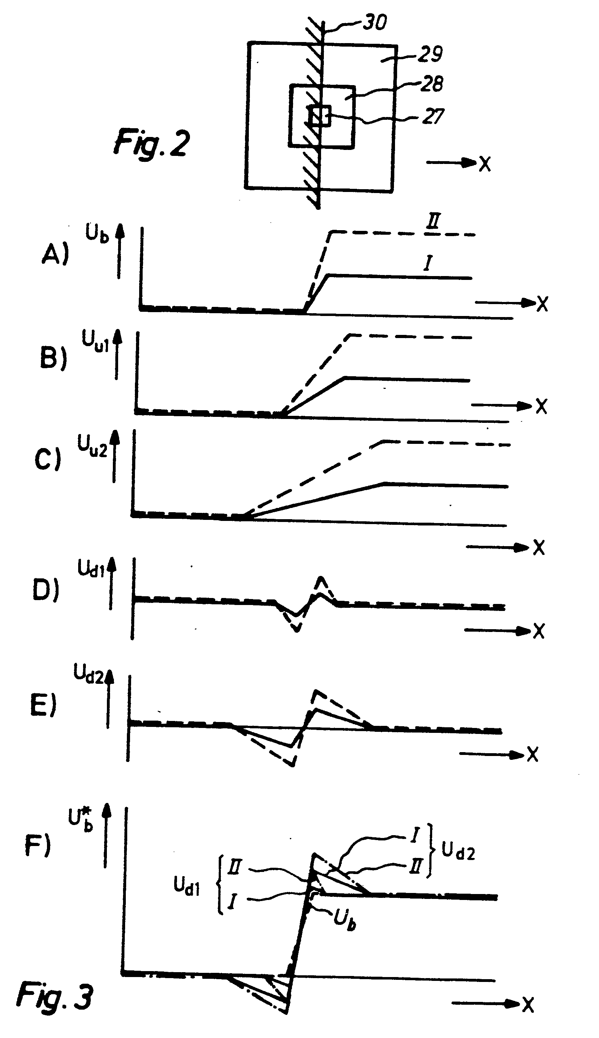

Die Fig. 2 und die in den Figuren 3 bis 5 dargestellten Signalverläufe verdeutlichen die Wirkungsweise des Bildreproduktionsgerätes.

Eine Abtasttrommel 1, eine Maskentrommel 2 und eine Aufzeichnungstrommel 3 sind durch Wellen 4 und 5 miteinander mechanisch verbunden und werden gemeinsam von einem Motor 6 in Richtung eines Pfeiles 7 angetrieben. Auf der Abtasttrommel 1 ist eine Vorlage 8 aufgespannt, die Halbtonbilder, Schriftzeichen und Strichelemente aufweisen möge. Die Vorlage 8 wird von einer Abtasteinrichtung 9 optoelektronisch punkt- und zeilenweise abgetastet. Das mit der Helligkeitsinformation der Vorlage 8 modulierte Abtastlicht 10 gelangt über ein Objektiv 11 in die Abtasteinrichtung 9, in welcher ein Bildsignal $U_b$, ein erstes Umfeldsignal $U_{u1}$ und ein zweites Umfeldsignal $U_{u2}$ erzeugt werden. Die Abtasteinrichtung 9 bewegt sich axial in Richtung eines Pfeiles 12 an der Abtasttrommel 1 vorbei.

Bei dem dargestellten Ausführungsbeispiel der Abtasteinrichtung 9 für Schwarz/Weiß-Vorlagen befindet sich im Strahlengang des Objektivs 11 ein halbdurchlässiger Spiegel 13, welcher aus dem Abtastlicht 10 ein erstes Teilbündel 15 abspiegelt. Das erste Teilbündel 15 fällt auf eine Bildpunkt-Blende 16. Der durch die Öffnung der Bildpunkt-Blende 16 gelangende Anteil des ersten Teilbündels 15 wird in einem optoelektronischen Wandler 17 in das Bildsignal $U_b$ auf einer Leitung 18 umgewandelt. Das Bildsignal $U_b$ ist ein Maß für die Helligkeit eines elementaren, als Bildpunkt bezeichneten Abtast-Bereiches auf der Vorlage 8, dessen Größe durch die Öffnung der Bildpunkt-Blende 16 bestimmt wird.

Ein zweiter teildurchlässiger Spiegel 19 im Strahlengang des Objektivs 11 spiegelt aus dem Abtastlicht 10 ein zweites Teilbündel 20 aus. Das zweite Teilbündel 20 fällt auf eine erste Umfeld-Blende 21, deren Öffnung größer als die der Bildpunkt-Blende 16 ist. Der durch die Öffnung der ersten Umfeld-Blende 21 gelangende Anteil des zweiten Teilbündels 20 wird in einem weiteren optoelektronischen Wandler 22 in das erste Umfeldsignal $U_{u1}$ auf einer Leitung 23 umgesetzt. Das erste Umfeldsignal $U_{u1}$ ist ein Maß für die mittlere Helligkeit eines ersten Umfeld-Bereiches, welcher durch die Öffnung der ersten Umfeld-Blende 21 festgelegt und gegenüber dem elementaren Abtast-Bereich vergrößert ist. Der Umfeld-Bereich kann auch als Bildpunkt-Bereich bezeichnet werden, da er mehrere den aktuellen Bildpunkt umgebene Bildpunkte umfaßt.

Das durch den halbdurchlässigen Spiegel 19 gelangende Abtastlicht 10 fällt durch die Öffnung einer zweiten Umfeld-Blende 24 auf einen weiteren optoelektronischen Wandler 25 und wird dort in das zweite Umfeldsignal $U_{u2}$ auf einer Leitung 26 umgewandelt. Die Öffnung der zweiten Umfeld-Blende 24 ist größer als die der ersten Umfeld-Blende 21, so daß ein noch größerer, zweiter Umfeld-Bereich bzw. Bildpunkt-Bereich um den aktuellen Bildpunkt erfaßt wird.

Zur Verdeutlichung sind in Fig. 2 der elementare Abtast-Bereich 27 (Bildpunkt) sowie der dazu konzentrische erste Umfeld-Bereich 28 und der zweite Umfeld-Bereich 29 dargestellt, deren Formen quadratisch angenommen sind. Die Umfeld-Bereiche können aber auch beispielsweise Kreisform oder jede andere beliebige Form haben. Angedeutet ist außerdem eine Konturlinie 30 auf der Vorlage (Schwarz/Weiß-Sprung), die sie aufgrund der Relativbewegung zwischen Vorlage und Abtasteinrichtung in X-Richtung bewegen möge.

In Fig. 3 zeigen die Diagramme (A), (B) und (C) die Verläufe des Bildsignals $U_b$, des ersten Umfeldsignals $U_{u1}$ und des zweiten Umfeldsignals $U_{u2}$ in Abhängigkeit des Weges x, auf dem sich gemäß Fig. 2 die Konturlinie 30 über die Umfeld-Bereiche hinwegbewegt. Dargestellt sind zwei unterschiedlich hohe Bildsignalsprünge (I ; II) durch eine ausgezogene und eine gestrichelte Linie.

Zurück zu Fig. 1.

Die Abtasteinrichtung 9 ist über die Leitungen 18, 23 und 26 mit einer Korrektur-Stufe 31 verbunden, in der aus dem Bildsignal $U_b$, dem ersten Umfeldsignal $U_{u1}$ und dem zweiten Umfeldsignal $U_{u2}$ einKorrektursignal $U_k$ auf einer Leitung 32 abgeleitet wird. Das Korrektursignal $U_k$ wird dem Bildsignal $U_b$ in einem nachgeschalteten Addierer 33 zur Kontrastanhebung an Konturen d. h. zur Aufsteilung von Bildsignalsprüngen überlagert. Die Stärke des Korrektursignals $U_k$ kann an einem Potentiometer 34 von Hand verändert werden. Das aufgesteilte Bildsignal $U_b^*$ wird in einer Gradations-Stufe 35 nach den Erfordernissen des Reproduktionsprozesses verzerrt, in einem Endverstärker 36 verstärkt und steuert dann ein Aufzeichnungsorgan 37, welches die punkt- und zeilenweise Wiederaufzeichnung der Vorlage 8 auf einem Aufzeichnungsmedium 38 vornimmt, das sich auf der Aufzeichnungstrommel 3 befindet. Das Aufzeichnungsorgan 37 bewegt sich ebenfalls axial in Richtung des Pfeiles 12 an der Aufzeichnungstrommel 3 entlang. Vorschubeinrichtungen für die Abtasteinrichtung 9 und das Aufzeichnungsorgan 37 sind nicht dargestellt.

Handelt es sich bei dem beschriebenen Bildreproduktionsgerät um ein Graviergerät zur Herstellung gerasterter Druckformen, ist das Aufzeichnungsorgan 37 z. B. ein elektromagnetisches Gravierorgan mit einem Gravierstichel als Schneidwerkzeug für die Rasterpunkte oder ein Energiestrahl-Erzeuger, dessen Energiestrahl die Rasterpunkte durch Materialverdampfung bildet. Handelt es sich dagegen um einen Scanner zur Herstellung gerasterter oder ungerasterter Druckformen, ist das Aufzeichnungsorgan 37 eine durch das Bildsignal helligkeitsmodulierte Lichtquelle, welche Filmmaterial belichtet.

Zur Erzeugung des Druckrasters wird dem Bildsignal $U_b^*$ im Endverstärker 36 ein Rastersignal $U_r$ auf einer Leitung 39 überlagert.

Im folgenden wird der Aufbau und die Wirkungsweise der Korrektur-Stufe 31 näher erläutert.

Die Korrektur-Stufe 31 weist zwei in der Verstärkung einstellbare Differenzverstärker 40 und 41 auf, in denen aus dem Bildsignal $U_b$, dem ersten Umfeldsignal $U_{u1}$ und dem zweiten Umfeldsignal $U_{u2}$ durch Differenzbildung nach Gleichung (1) ein erstes Differenzsignal $U_{d1}$ auf einer Leitung 42 und ein zweites Differenzsignal $U_{d2}$ auf einer Leitung 43 gebildet werden. Die Bewertungsfaktoren $g_1$ und $g_2$ entsprechen den Verstärkungsfaktoren der Differenzverstärker 40 und 41.

$$U_{d1} = g_1(U_b - U_{u1})$$
$$U_{d2} = g_2(U_b - U_{u2})$$
(1)

Die Differenzsignale $U_{d1}$ und $U_{d2}$ sind in den Diagrammen (D) und (E) der Fig. 3 dargestellt, wobei die gestrichelt gezeichneten Verläufe wiederum für den höheren Bildsignalsprung gelten.

Diagramm (F) veranschaulicht die Überlagerung von Bildsignal $U_b$ und Differenzsignal $U_{d1}$ bzw. $U_{d2}$ in dem Addierer 33 zwecks Bildsignalaufteilung für den angenommenen Fall, daß die Differenzsignale $U_{d1}$ und $U_{d2}$ in der Korrektur-Stufe 31 zunächst keine weitere Modifikation erfahren. Aus den Diagrammen (D), (E) und (F) wird ersichtlich, daß die Differenzsignale $U_{d1}$ und $U_{d2}$ aufgrund der zwei unterschiedlich großen Umfeld-Bereiche um den aktuellen Bildpunkt unterschiedliche Wirkungsbreiten in X-Richtung aufweisen ; wobei die Wirkungsbreiten der Differenzsignale $U_{d1}$ und $U_{d2}$ im gewählten Ausführungsbeispiel durch die Öffnungen der beiden Umfeld-Blenden 21 und 24 bestimmt werden.

Zur Erzeugung einer variablen Wirkungsbreite für das Korrektursignal $U_k$, die durch die Wirkungsbreiten des ersten und zweiten Umfeld-Bereiches begrenzt wird, werden die Differenzsignale $U_{d1}$ und $U_{d2}$ zunächst in einer Misch-Stufe 44 kombiniert.

Die Kombination der Differenzsignale $U_{d1}$ und $U_{d2}$ zu einem Mischsignal $U_m$ auf einer Leitung 45 erfolgt gemäß Gleichung (2) in Abhängigkeit eines das Mischverhältnis bestimmenden Steuersignals S mit den normierten Endwerten S = 0 und S = 1 auf einer Leitung 46, wobei, wie noch gezeigt wird, das Mischverhältnis die Wirkungsbreite des Korrekturesignals $U_k$ bestimmt.

$$U_m = S \cdot U_{d1} + (1 - S) U_{d2}$$
(2)

Die Misch-Stufe 44 besteht im Ausführungsbeispiel aus einem ersten Multiplizierglied 47, einem zweiten Multiplizierglied 48, einem nachgeschalteten Addierer 49 und aus einem Inverter 50. Das erste Multiplizierglied 47 ist mit dem ersten Differenzsignal $U_{d1}$ auf der Leitung 42 und dem Steuersignal S auf der Leitung 46, das zweite Multiplizierglied 48 mit dem Differenzsignal $U_{d2}$ auf der Leitung 43 und dem Signal (1-S) beaufschlagt.

Das Signal (1-S) wird in dem Inverter 50 gebildet. Die Ausgangssignale der Multiplizierglieder 47 und 48 werden in dem Addierer 49 summiert, um das Mischsignal $U_m$ zu erhalten.

Das Steuersignal S hat zwischen den Endwerte S = 0 und S = 1 einen linearen oder beliebigen Verlauf, der z. B. in einer Verzerrer-Stufe 51 aus dem Steuersignal S' erzeugt werden kann. Bei den Endwerten des Steuersignals S erscheint am Ausgang der Misch-Stufe 44 entweder das erste Differenzsignale $U_{d1}$ (kleine Wirkungsbreite) oder das zweite Differenzsignal $U_{d2}$ (große Wirkungsbreite) als Mischsignal $U_m$, bei einem Zwischenwert des Steuersignals S ein dem Mischverhältnis entsprechender Wert des Mischsignals $U_m$.

Die Misch-Stufe 44 kann auch lediglich als Umschalter wirken, wenn das Steuersignal S zwischen den Endwerten S = 0 und S = 1 hin- und hergeschaltet wird.

Das Steuersignal S' wird wahlweise durch Maskenabtastung oder durch Auswerten der Konturen in der Vorlage gewonnen.

Im Falle der Maskenabtastung ist auf der Maskentrommel 2 eine Steuermaske 52 angeordnet, die zur Erzeugung des Steuersignals S' auf einer Leitung 53 von einem optoelektronischen Abtastorgan 54 punkt- und zeilenweise sowie synchron und registerhaltig zur Vorlage 8 abgetastet wird. Im einfachsten Fall sind in der Steuermaske 52 die mit der kleinen Wirkungsbreite des ersten Differenzsignals $U_{d1}$ zu korrigierenden Vorlagenbereiche als Weiß-Information und die mit der großen Wirkungsbreite des zweiten Differenzsignals $U_{d2}$ zu korrigierenden Vorlagenbereiche als Schwarz-Information enthalten. Bei Abtastung dieser Schwarz/Weiß-Steuermaske (Schaltmaske) entsteht ein sich sprungartig zwischen den Endwerten S = 0 und S = 1 änderndes Steuersignal S', mit dem die entsprechenden Differenzsignale $U_{d1}$ und $U_{d2}$ in der Misch-Stufe 44 umgeschaltet werden. In einer Varianten weist die Steuermaske 52 zusätzliche, das Mischverhältnis bestimmende Grauinformationen auf, durch deren Abtastung Zwischenwerte des Steuersignals S' gewonnen werden. Alternativ zur Maskenabtastung kann das Steuersignal S' auch mittels eines Maskenspeichers erzeugt werden.

0 098 319

Im Falle, daß das Steuersignal S' durch Auffinden und Auswerten von Konturen in der Vorlage gewonnen wird, ist in der Schaltungsanordnung eine Konturauswerte-Stufe 55 vorhanden, die mit dem Bildsignal $U_b$ beaufschlagt ist. In dieser Konturauswerte-Stufe 55 werden durch Auswerten des Bildsignals $U_b$ die Gradienten (Steigungen) und/oder die Kontraste (Dichtesprünge) der Vorlagenkonturen festgestellt und daraus das Steuersignal S' in der Weise gewonnen, daß der festgestellte Gradient und/oder Kontrast jeweils das Mischverhältnis der Differenzsignale $U_{d1}$ und $U_{d2}$ und somit auch die Wirkungsbreite des Korrektursignals $U_k$ bestimmten. Auf diese Weise wird z. B. erreicht, daß bei einer steilen Kontur eine kleine Wirkungsbreite, bei einer flachen Kontur dagegen eine große Wirkungsbreite des Korrektursignals $U_k$ entsteht. Alternativ zum Gradienten oder Kontrast könnte das Mischverhältnis auch vom Über- oder Unterschreiten bestimmter Grenzdichten abhängig gemacht werden.

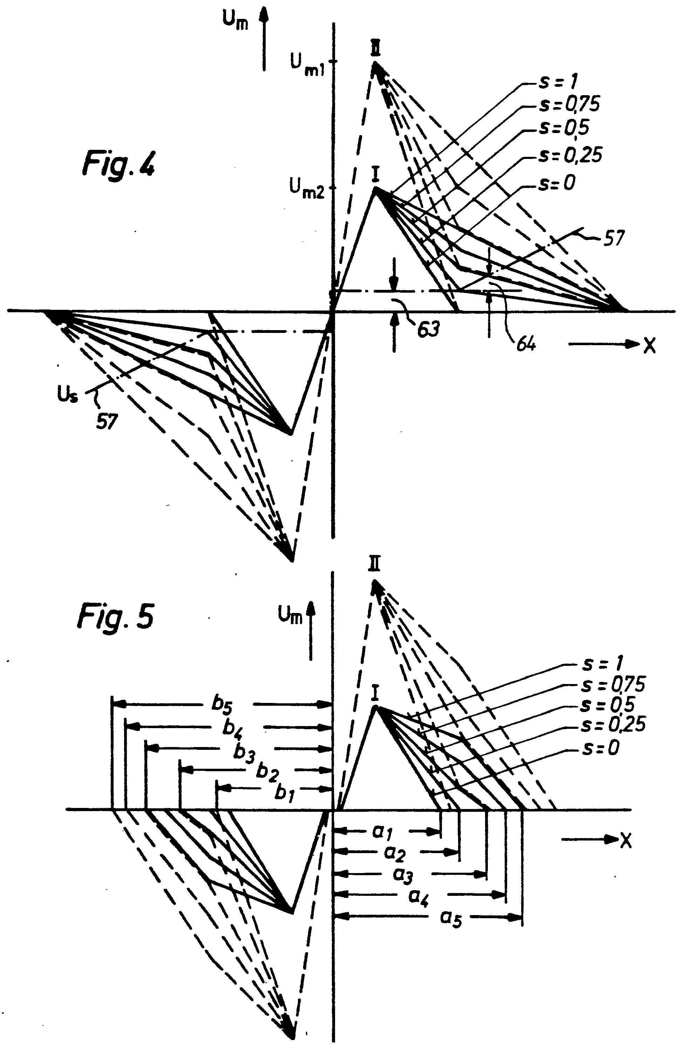

Fig. 4 zeigt die Differenzsignale $U_{d1}$ und $U_{d2}$ in Abhängigkeit von fünf charakteristischen Steuersignalwerten S in einem gegenüber den Diagrammen der Fig. 3 vergrößerten Maßstab. Die ausgezogenen und gestrichelten Verläufe gelten wiederum für unterschiedliche Bildsignalsprünge (I ; II) gemäß Fig. 3.

In der nachfolgenden Tabelle sind die Mischanteile der Differenzsignale $U_{d1}$ und $U_{d2}$ für fünf charakteristische Steuersignalwerte S zusammengestellt.

| Steuersignal | Mischanteile % | |
|---|---|---|
| S | $U_{d1}$ | $U_{d2}$ |
| 0 | 100 | 0 |
| 0,25 | 25 | 75 |
| 0,50 | 50 | 50 |
| 0,75 | 75 | 25 |
| 1,0 | 0 | 100 |

Für den Steuersignalwert S = 0 entspricht der Verlauf des Mischsignals $U_m$ dem des ersten Differenzsignals $U_{d1}$ mit der kleineren Wirkungsbreite (Fig. 3 ; Diagramm D), für den Steuersignalwert S = 1 entspricht der Verlauf des Mischsignals $U_m$ dagegen dem Verlauf des zweiten Differenzsignals $U_{d2}$ mit der größeren Wirkungsbreite (Fig. 3, Diagramm E). Zwischen diesen Grenzverläufen liegen verschiedene Mischsignale $U_m$ beispielsweise für die Steuersignalwerte S = 0,25 ; S = 0,5 und S = 0,75.

Aus der Darstellung ist ersichtlich, daß das Mischsignal $U_m$ zunächst zwar nur mit zwei unterschiedlichen Wirkungsbreiten zur Verfügung steht, daß aber bereits durch die Mischung der Differenzsignale $U_{d1}$ und $U_{d2}$ verschiedene von einem « Dreiecksimpuls » abweichende Impulsformen gebildet werden, welche durch das Steuersignal S ausgewählt werden können und bei Überlagerung mit dem Bildsignal im Sinne unterschiedlicher Wirkungsbreiten wirken würden.

Zur Erzeugung echter unterschiedlicher Wirkungsbreiten für das Korrektursignal $U_k$ ist der Misch-Stufe 44 eine Schwellen-Schaltung 56 nachgeschaltet, in der das Mischsignal $U_m$ in positive und negative Korrektur-Anteile aufgespalten und diese mit einem positiven Schwellensignal $+ U_s$ bzw. einem negativen Schwellensignal $— U_s$ verglichen werden. Fig. 4 zeigt den Verlauf der Schwellensignale $\pm U_s$ als strichpunktierte Linie 57.

Die Schwellen-Schaltung 56 besteht aus einem ersten Differenzverstärker 58 mit nachgeschalteter Diode 59 und einem zweiten Differenzverstärker 60 mit nachgeschalteter Diode 61. Die Differenzverstärker 58 und 60 sind jeweils mit dem Mischsignal $U_m$ sowie mit sowie mit dem positiven Schwellensignal $+ U_s$ bzw. mit dem in einem Inverter 62 invertierten negativen Schwellensignal $— U_s$ beaufschlagt. Das Schwellensignal $U_s$ setzt sich gemäß dem in Fig. 4 angedeuteten Verlauf 57 aus einer einstellbaren Konstantspannung $U_s'$ (Verlauf 63) und einer von dem Steuersignal S abhängigen Spannung $U_s'' = g_3 S$ (Verlauf 64) zusammen, wobei das Schwellensignal $U_s = U_s'$ für die Bedingung $U_{d1} \neq 0$ und $U_s = (U_s' + U_s'')$ für die Bedingung $U_{d1} = 0$ ist. Das Schwellensignal $U_s$ wird in einem Schwellensignal-Generator 65 gewonnen, die an einem Potentiometer 66 einstellbare Konstantspannung $U_s'$ auf einer Leitung 67 und die vom Steuersignal S mittels eines Verstärkers 68 mit dem Verstärkungsfaktor $g_3$ abgeleitete Spannung $U_s''$ auf einer Leitung 69 zugeführt werden.

Die in der Schellen-Schaltung 56 erzeugten Korrektur-Anteile werden in Verstärkern 70 und 71 selektiv verstärkt und in einem Addierer 72, der als Balance-Regler ausgebildet sein kann, zu dem Korrektursignal $U_k$ auf der Leitung 32 summiert.

Das Korrektursignal $U_k$ ist in Fig. 5 dargestellt. Man erkennt wie in Abhängigkeit der Steuersignalwerte S unterschiedliche Wirkungsbreiten $a_1$ bis $a_5$ für einen kleinen Bildsignalsprung (I) und $b_1$ bis $b_5$ für einen großen Bildsignalsprung (II) erzeugt werden.

Mit Hilfe der Verstärker 70 und 71 lassen sich die positiven und negativen Korrektur-Anteile zwecks symmetrischer oder unsymmetrischer Kontrastanhebung getrennt voneinander beeinflussen. Dazu sind

5

**0 098 319**

die Verstärkungsfaktoren der Verstärker 70 und 71 über Steuereingänge 73 und 74 mittels Potentiometer von Hand einstellbar oder durch Regelsignale steuerbar.

Es erweist sich als besonders zweckmäßig, die positiven und negativen Korrektur-Anteile in Abhängigkeit der mittleren Helligkeit der Vorlage (unter Eliminierung der Konturen) zu verändern. In der Konturauswerte-Stufe 55 wird dazu aus dem Bildsignal $U_b$ ein von der mittleren Helligkeit der Vorlage abhängiges Signal R erzeugt. Dieses Signal R wird in zwei unterschiedlich eingestellten Funktionsgebern 75 und 76 in zwei Regelsignale R' und R" für die Verstärkungsgrade der beiden Verstärker 70 und 71 umgesetzt. Der Verstärklungsgrad des Verstärkers 70 für den positiven Korrektur-Anteil ist beispielsweise von « Schwarz » bis zu einem bestimmten in der Nähe vom « Weiß » liegenden Grauwert konstant und nimmt vom Grauwert bis zum « Weiß » bis Null ab. Der Verstärkungsgrad des Verstärkers 71 für den negativen Korrektur-Anteil nimmt dagegen vom « Schwarz » bis zu einem in der Nähe von « Schwarz » liegenden Grauwert zu und ist dann von diesem Grauwert bis zum « Weiß » konstant.

Durch die unsymmetrische Kontrastanhebung in Abhängigkeit der Helligkeit wird z. B. erreicht, daß bei einer nahe « Weiß » liegenden Kontur der positive Korrektur-Anteil und bei einer nahe « Schwarz » liegenden Kontur der negative Korrektur-Anteil jeweils gegenüber dem anderen Korrektur-Anteil abgeschwächt wird.

Die Erfindung ist nicht auf das dargestellte Ausführungsbeispiel der Abtasteinrichtung 11 zur gleichzeitigen Umfeldauswertung beschränkt.

Im optischen Aufbau können anstelle der teildurchlässigen Spiegel auch kreisringförmige Spiegel verwendet werden, bei denen die Öffnung in der Spiegelmitte den elementaren Abtast-Bereich oder Bildpunkt und die Kreisringfläche einen Umfeld-Bereich festlegen.

Zur gleichzeitigen Erfassung der Bildpunkt-Umgebung kann die Abtasteinrichtung 9 auch mit Fotodioden-Zeilen oder einer Fotodioden-Matrix ausgerüstet sein. Eine andere Ausführungsform der Abtasteinrichtung 9 besteht aus einem herkömmlichen Abtastorgan, das lediglich ein Bildsignal erzeugt. In Zeilenspeichern, welche dem Abtastorgan nachgeschaltet sind, werden dann die Bildsignalwerte mehrerer der aktuell abgetasteten Zeile benachbarter Zeilen oder Zeilenabschnitte zwischengespeichert. Schließlich kann dem Abtastorgan auch ein sogenannter Ganzbild-Speicher nachgeschaltet sein, in dem sämtliche Bildsignalwerte einer Vorlage abgelegt sind. In beiden Fällen werden die Umfeldsignale aus den abgespeicherten Bildsignalwerten, die in die Umfeld-Bereiche fallen, berechnet. Solche Umfeld-Berechnungen sind z. B. aus der DE-PS 2137676 bekannt. Selbstverständlich kann anstelle einer Abtasteinrichtung für Schwarz/Weiß-Abtastung auch eine solche für Farb-Abtastung verwendet werden.

**Patentansprüche**

1. Verfahren zur Kontraststeigerung bei der Wiederaufzeichnung von Vorlagen, bei dem

a) eine Vorlage (8) zur Gewinnung eines Bildsignals ($U_b$) bildpunkt- und zeilenweise optoelektronisch abgetastet wird,

b) ein erstes Umfeldsignal ($U_{u1}$) durch Bestimmen der mittleren Helligkeit eines ersten Umfeldbereiches (28) um den jeweiligen Bildpunkt erzeugt wird,

c) ein erstes Differenzsignal ($U_{d1}$) aus dem Bildsignal ($U_b$) und dem ersten Umfeldsignal ($U_{u1}$) gebildet wird und

d) dem Bildsignal ($U_b$) ein Korrektursignal ($U_k$) überlagert wird, um ein kontrastkorrigiertes Bildsignal ($U_b^*$) zu erhalten, dadurch gekennzeichnet, daß

e) ein zweites Umfeldsignal ($U_{u2}$) durch Bestimmen der mittleren Helligkeit eines gegenüber dem ersten Umfeld-Bereich (28) vergrößerten zweiten Umfeld-Bereiches (29) um den jeweiligen Bildpunkt erzeugt wird,

f) ein zweites Differenzsignal ($U_{d2}$) aus dem Bildsignal ($U_b$) und dem zweiten Umfeldsignal ($U_{u2}$) gebildet wird und

g) Vielfache des ersten und zweiten Differenzsignals ($U_{d1}$ ; $U_{d2}$) in einem wählbaren Verhältnis miteinander gemischt werden, um ein als Korrektursignal ($U_k$) dienendes Mischsignal ($U_m$) zu erhalten.

2. Verfahren nach Anspruch 1, dadurch gekennzeichnet, daß das Mischsignal ($U_m$) mit einem Schwellensignal ($U_s$) verglichen wird, um ein Korrektursignal ($U_k$) mit einer vom Mischverhältnis abhängigen variablen Wirkungsbreite zu erhalten.

3. Verfahren nach Anspruch 1 oder 2, dadurch gekennzeichnet, daß das Mischverhältnis vom Dichtegradienten einer Kontur in der abgetasteten Vorlage abhängig ist.

4. Verfahren nach Anspruch 1 oder 2, dadurch gekennzeichnet, daß das Mischverhältnis vom Kontrast in der abgetasteten Vorlage abhängig ist.

5. Verfahren nach Anspruch 1 oder 2, dadurch gekennzeichnet, daß das Mischverhältnis aus der durch Abtastung einer Steuermaske gewonnenen Information abgeleitet wird.

6. Verfahren nach einem der Ansprüche 1 bis 5, dadurch gekennzeichnet, daß

a) das erste Differenzsignal ($U_{d1}$) mit einem das Mischverhältnis bestimmenden Steuersignal (S) und das zweite Differenzsignal ($U_{d2}$) mit einem aus dem Steuersignal (S) abgeleiteten Signal (1-S) multipliziert werden und

b) die durch Multiplikation erhaltenen Signale addiert werden, um das Mischsignal ($U_m$) zu erzeugen.

7. Verfahren nach einem der Ansprüche 1 bis 6, dadurch gekennzeichnet, daß

a) das Mischsignal ($U_m$) in positive und negative Korrektur-Anteile aufgespalten wird,

b) die positiven und negativen Korrektur-Anteile getrennt mit entsprechenden positiven oder negativen Schwellensignalen ($U_s$) verglichen werden und

c) die positiven und negativen Korrektur-Anteile addiert werden, um das Korrektursignal ($U_k$) zu erhalten.

8. Verfahren nach einem der Ansprüche 1 bis 7, dadurch gekennzeichnet, daß das Schwellensignal ($U_s$) einen konstanten Wert hat, falls das erste Differenzsignal ($U_{d1}$) von Null verschieden ist und das Schwellensignal vom konstanten Wert aus in Abhängigkeit des Mischverhältnisses ansteigt, falls das erste Differenzsignal ($U_{d1}$) Null ist.

9. Verfahren nach einem der Ansprüche 1 bis 8, dadurch gekennzeichnet, daß die positiven und negativen Korrektur-Anteile für eine unsymmetrische Kontrastanhebung unterschiedlich verstärkt werden.

10. Verfahren nach Anspruch 9, dadurch gekennzeichnet, daß die Verstärkung von der mittleren Helligkeit der abgetasteten Vorlage abhängig ist.

11. Verfahren nach einem der Ansprüche 1 bis 10, dadurch gekennzeichnet, daß die Umfeldsignale ($U_{u1}$, $U_{u2}$) durch zusätzliche Abtastung der Vorlage mittels Umfeld-Blenden gewonnen werden, wobei die Blendenöffnungen jeweils die Umfeld-Bereiche festlegen.

12. Verfahren nach einem der Ansprüche 1 bis 10, dadurch gekennzeichnet, daß die Umfeldsignale ($U_{u1}$, $U_{u2}$) aus den Bildsignalwerten der in den jeweiligen Umfeld-Bereichen liegenden Bildpunkte berechnet werden.

13. Anordnung zur Kontraststeigerung bei der Wiederaufzeichnung von Vorlagen, bestehend aus

a) einem Abtastorgan (9) mit einem opto-elektronischen Wandler (17) zur Gewinnung eines Bildsignals ($U_b$),

b) einer ersten Signalquelle (22) zur Erzeugung eines ersten Umfeldsignals ($U_{u1}$) aus der mittleren Helligkeit eines ersten Umfeld-Bereiches (28) um den abgetasteten Bildpunkt,

c) einer Signalformerstufe (31) zur Erzeugung eines Korrektursignals ($U_k$) mit einem Differenzverstärker (40) zur Bildung eines ersten Differenzsignals ($U_{d1}$) aus dem Bildsignal ($U_b$) und dem ersten Umfeldsignal ($U_{u1}$), dessen Eingänge mit dem Abtastorgan (9) und der ersten Signalquelle (22) verbunden sind, und

d) eine mit dem Abtastorgan (9) und der Signalformerstufe (31) verbundenen Überlagerungsstufe (33) für Bildsignal ($U_b$) und Korrektursignal ($U_k$), dadurch gekennzeichnet, daß

e) eine zweite Signalquelle (23) zur Erzeugung eines zweiten Umfeldsignals ($U_{u2}$) aus der mittleren Helligkeit eines gegenüber dem ersten Umfeld-Bereich (28) vergrößerten zweiten Umfeld-Bereiches (29) um den abgetasteten Bildpunkt vorhanden ist und

f) die Signalformerstufe (31) zusätzlich folgende Komponenten aufweist:

$f_1$) einen zweiten Differenzverstärker (41) zur Bildung eines zweiten Differenzsignals ($U_{d2}$) aus dem Bildsignal ($U_b$) und dem zweiten Umfeldsignal ($U_{u2}$), dessen Eingänge mit dem Abtastorgan (9) und der zweiten Signalquelle (25) in Verbindung stehen,

$f_2$) eine Misch-Stufe (44) zur Mischung des ersten und zweiten Differenzsignals ($U_{d1}$ ; $U_{d2}$) in Abhängigkeit eines das Mischverhältnis bestimmenden Steuersignals (S), welche an die Differenzverstärker (40 ; 41) angeschlossen ist und

$f_3$) einen Steuersignal-Generator (51 ; 52 ; 54 ; 55), welcher mit der Misch-Stufe (44) in Verbindung steht.

14. Anordnung nach Anspruch 13, dadurch gekenzeichnet, daß

a) der Misch-Stufe (44) eine Schwellen-Schaltung (56) nachgeschaltet ist, um das Mischsignal ($U_m$) in positive und negative Korrektur-Anteile aufzuspalten und diese mit Schwellensignalen ($U_s$) zu vergleichen,

b) der Schwellen-Schaltung (56) ein Addierer (72) für die Korrektur-Anteile nachgeschaltet ist und

c) ein Generator (62, 65, 66, 68) vorgesehen ist, um die Schwellensignale ($U_s$) zu erzeugen.

15. Anordnung nach Anspruch 13 oder 14, dadurch gekennzeichnet, daß in den Signalwegen der Korrektur-Anteile Verstärker (70, 71) eingeschaltet sind, um die Korrektur-Anteile unterschiedlich zu verstärken.

16. Anordnung nach einem der Ansprüche 13 bis 15, dadurch gekennzeichnet, daß die Misch-Stufe (44) folgende Komponenten aufweist,

a) einen ersten Multiplizierer (47), welcher an den Steuersignal-Generator (51, 52, 54, 55) und den ersten Differenzverstärker (40) angeschlossen ist,

b) eine Invertierungs-Stufe (50), die mit dem Steuersignal-Generator in Verbindung steht,

c) einen zweiten Multiplizierer (48), welcher mit der Invertierungs-Stufe (50) und dem zweiten Differenzverstärker (41) verbunden ist und

d) einen Addierer (49), welcher an den ersten und zweiten Multiplizierer (47, 48) angeschlossen ist.

17. Anordnung nach einem der Ansprüche 13 bis 16, dadurch gekennzeichnet, daß der Steuersignal-Generator als Auswerte-Schaltung (53) für Konturen in der Vorlage ausgebildet ist, welche mit dem Bildsignal beaufschlagt ist.

18. Anordnung nach einem der Ansprüche 13 bis 16, dadurch gekennzeichnet, daß der Steuersignal-Generator als Abtasteinrichtung für eine Steuermaske (52, 54) ausgebildet ist.

19. Anordnung nach einem der Ansprüche 13 bis 18, dadurch gekennzeichnet, daß

a) die erste Signalquelle (22) eine erste Umfeld-blende (21), deren Blendenöffnung den ersten Umfeld-Bereich festlegt, und einen optoelektronischen Wandler (22) zur Gewinnung des ersten Umfeldsignals und

b) die zweite Signalquelle (25) eine zweite Umfeld-Blende (24), deren Blendenöffnung den zweiten Umfeld-Bereich festlegt und einen weiteren optoelektronischen Wandler (25) zur Gewinnung des zweiten Umfeldsignals enthält.

## Claims

1. Method for contrast intensification during rerecording of originals, in which

a) an original (8) is scanned opto-electronically image dot by image dot and line by line to obtain an image signal ($U_b$),

b) a first outer field signal ($U_{u1}$) is generated by determining the mean brightness of a first outer field area around the image dot in question,

c) a first differential signal ($U_{d1}$) is formed from the image signal ($U_b$) and the first outer field signal ($U_{u1}$), and

d) the image signal ($U_b$) has superimposed on it a corrective signal ($U_k$) to obtain a contrast-corrected image signal ($U_b^*$), characterised in that

e) a second outer field signal ($U_{u2}$) is generated by determining the mean brightness of a second outer field section (29) around the image dot in question which is enlarged as compared to the first outer field section (28),

f) a second differential signal ($U_{d2}$) is formed from the image signal ($U_b$) and the second outer field signal ($U_{u2}$) and

g) multiples of the first and second differential signals ($U_{d1}$ ; $U_{d2}$) are intermixed in a selectible ratio to obtain a composite signal ($U_m$) serving the purpose of a corrective signal ($U_k$).

2. Method according to claim 1, characterised in that the mixing signal ($U_m$) is compared to a threshold signal ($U_s$) to obtain a corrective signal ($U_k$) with a variable effective amplitude depending on the mixing ratio.

3. Method according to claim 1 or 2, characterised in that the mixing ratio depends on the density gradient of a contour in the original scanned.

4. Method according to claim 1 or 2, characterised in that the mixing ratio depends on the contrast in the original scanned.

5. Method according to claims 1 or 2, characterised in that the mixing ratio is derived from the data obtained by scanning a control mask.

6. Method according to one of the claims 1 to 5, characterised in that

a) the first differential signal ($U_{d1}$) is multiplied by the control signal (S) determining the mixing ratio and the second differential signal ($U_{d2}$) is multiplied by a signal (1-S) derived from the control signal (S), and

b) the signals obtained by multiplication are summated to obtain the composite signal ($U_m$)

7. Method according to one of the claims 1 to 6, characterised in that

a) the composite signal ($U_m$) is split into positive and negative corrective components,

b) the positive and negative corrective components are separately compared to corresponding positive or negative threshold signals ($U_s$), and

c) the positive and negative corrective components are summated to obtain the corrective signal ($U_k$).

8. Method according to one of the claims 1 to 7, characterised in that the threshold signal ($U_s$) has a constant value if the first differential signal ($U_{d1}$) differs from nought and the threshold signal increases from the constant value as a function of the mixing ratio if the first differential signal ($U_{d1}$) is zero

9. Method according to one of the claims 1 to 8, characterised in that the positive and negative corrective components are differentially amplified for an asymmetrical contrast intensification.

10. Method according to claim 9, characterised in that the amplification depends on the mean brightness of the original scanned.

11. Method according to one of the claims 1 to 10, characterised in that the outer field signals ($U_{u1}$. $U_{u2}$) are obtained by complementary scanning of the original by means of outer field diaphragms, the diaphragm apertures determining the outer field sections in each case.

12. Method according to one of the claims 1 to 10, characterised in that the outer field signals ($U_{u1}$. $U_{u2}$) are calculated from the image signal values of the image dots situated in the outer field sections in question.

13. System for contrast intensification during rerecording of originals, comprising

a) a scanner unit (9) comprising an opto-electronic transducer (17) for obtaining an image signal ($U_b$),

b) a first signal source (22) for generating a first outer field signal ($U_{u1}$) from the mean brightness of a first outer field section (28) around the image dot scanned,

c) a signal shaper stage (31) for generating a corrective signal ($U_k$) comprising a differential amplifier (40) for forming a first differential signal ($U_{d1}$) from the first image signal ($U_b$) and the first outer field signal ($U_{u1}$) whose inputs are connected to the scanner unit (9) and the first signal source (22), and

d) a superimposition stage (33) connected to the scanner unit (9) and to the signal shaper stage (31) for the image signal ($U_b$) and the corrective signal ($U_k$), characterised in that

e) a second signal source (23) is present for generating a second outer field signal ($U_{u2}$) from the mean brightness of a second outer field section (29) around the image dot scanned, which is enlarged as compared to the first outer field section (28), and

f) the signal shaper stage (31) complementarily comprises the following components :

$f_1$) a second differential amplifier (41) for generating a second differential signal ($U_{d2}$) from the image signal ($U_b$) and the second outer field signal ($U_{u2}$), whose inputs are connected to the scanner unit (9) and to the second signal source (25),

$f_2$) a mixer stage (44) for mixing the first and second differential signals ($U_{d1}$ ; $U_{d2}$) as a function of a control signal (S) determining the mixing ratio, which is connected to the differential amplifiers (40 ; 41), and

$f_3$) a control signal generator (51 ; 52 ; 54 ; 55) which is coupled to the mixer stage (44).

14. System according to claim 13, characterised in that

a) a threshold circuit (56) is post-connected to the mixer stage (44) to split the composite signal ($U_m$) into positive and negative corrective components and compare these to threshold signals ($U_s$),

b) a summator (72) for the corrective components is post-connected to the threshold circuit (56), and

c) a generator (62, 65, 66, 68) is provided for generating the threshold signals ($U_s$).

15. System according to claim 13 or 14, characterised in that amplifiers (70, 71) intended for differential amplification of the corrective components are interpolated into the signal channels of the corrective component amplifiers (70, 71).

16. System according to one of the claim 13 to 15, characterised in that the mixer stage (44) has the following components,

a) a first multiplier (47) which is connected to the control signal generator (51, 52, 54, 55) and the first differential amplifier (40),

b) an inverter stage (50) which is coupled to the control signal generator,

c) a second multiplier (48) which is connected to the inverter stage (50) and the second differential amplifier (41), and

d) a summator (49) which is connected to the first and second multipliers (47, 48).

17. System according to one of the claims 13 to 16, characterised in that the control signal generator is constructed as an evaluator circuit (53) for contours in the original which is acted upon by the image signal.

18. System according to one of the claims 13 to 16, characterised in that the control signal generator is constructed as a scanner system for a control mask (52, 54).

19. System according to one of the claims 13 to 18, characterised in that

a) the first signal source (22) comprises a first outer field diaphragm (21) whose diaphragm aperture determines the first outer field section, and an opto-electronic transducer (22) for obtaining the first outer field signal, and

b) The second signal source (25) comprises a second outer field diaphragm (24) whose diaphragm aperture determines the second outer field section, and another opto-electronic transducer (25) for obtaining the second outer field signal.

## Revendications

1. Procédé pour augmenter le contraste lors de la reproduction de modèles, selon lequel :

a) pour obtenir un signal d'image ($U_b$), on détecte un modèle (8) par point et par ligne de manière opto-électronique,

b) on génère un premier signal de champ environnant ($U_{u1}$) en déterminant la clarté moyenne d'une première zone de champ environnant (28) autour du point-image respectif,

c) on forme un premier signal de différence ($U_{d1}$) à partir du signal d'image ($U_b$) et du premier signal de champ environnant ($U_{u1}$),

d) on superpose un signal de correction ($U_k$) au signal d'image ($U_b$) pour obtenir un signal d'image corrigé en contraste ($U_b^*$), caractérisé en ce que :

e) on forme un second signal de champ environnant ($U_{u2}$) en déterminant la clarté moyenne d'une seconde zone de champ environnant (29) plus grande que la première zone de champ environnant (28) et entourant le point-image respectif,

f) on forme un second signal de différence ($U_{d2}$) à partir du signal-image ($U_b$) et du second signal de champ ($U_{u2}$) et,

9

# 0 098 319

g) on mélange suivant un rapport choisi, des multiples du premier et du second signal de différence ($U_{d1}$ ; $U_{d2}$) pour obtenir un signal de mélange ($U_m$) servant de signal de correction ($U_k$).

2. Procédé selon la revendication 1, caractérisé en ce que le signal de mélange ($U_m$) est comparé un signal de seuil ($U_s$) pour obtenir un signal de correction ($U_k$) à largeur d'action variable dépendant du rapport de mélange.

3. Procédé selon la revendication 1 ou 2, caractérisé en ce que le rapport de mélange dépend des gradients de densité d'un contour du modèle détecté.

4. Procédé selon la revendication 1 ou 2, caractérisé en ce que le rapport de mélange dépend du contraste du modèle détecté.

5. Procédé selon la revendication 1 ou 2, caractérisé en ce que le rapport de mélange est obtenu à partir de l'information fournie par un masque de commande.

6. Procédé selon l'une des revendications 1 à 5, caractérisé en ce que :

a) le premier signal de différence ($U_{d1}$) est multiplié par un signal de commande (S) qui détermine le rapport de mélange et le second signal de différence ($U_{d2}$) est multiplié par un signal (1-S) obtenu à partir du signal de commande (S), et

b) les signaux obtenus par multiplication sont additionnés pour former le signal de mélange ($U_m$).

7. Procédé selon l'une des revendications 1 à 6, caractérisé en ce que :

a) le signal de mélange ($U_m$) est divisé en une composante de correction positive et une composante de correction négative,

b) les composantes de correction positive et négative sont comparées séparément à des signaux de seuil ($U_s$) positif ou négatif correspondants et,

c) les composantes de correction positive et négative sont additionnées pour obtenir le signal de correction ($U_k$).

8. Procédé selon l'une des revendications 1 à 7, caractérisé en ce que le signal de seuil ($U_s$) a une valeur constante dans le cas où le premier signal de différence ($U_{d1}$) est différent de zéro et le signal de seuil augmente à partir de la valeur constante en fonction du rapport de mélange dans le cas où le premier signal de différence ($U_{d1}$) est nul.

9. Procédé selon l'une des revendications 1 à 8, caractérisé en ce que les composantes de correction positive et négative sont amplifiées différemment pour augmenter le contraste de façon asymétrique.

10. Procédé selon la revendication 9, caractérisé en ce que l'amplification dépend de la clarté moyenne du modèle détecté.

11. Procédé selon l'une des revendications 1 à 10, caractérisé en ce que les signaux de champ environnant ($U_{u1}$, $U_{u2}$) sont déterminés par détection complémentaire du modèle à l'aide d'écrans de champ environnant, les ouvertures des écrans déterminant respectivement les zones des champs environnants.

12. Procédé selon l'une des revendications 1 à 10, caractérisé en ce que les signaux de champ environnant ($U_{u1}$, $U_{u2}$) sont calculés à partir des valeurs des signaux d'image des points-image situés dans les zones respectives des champs environnants.

13. Montage pour augmenter le contraste lors de la reproduction de modèles, comprenant :

a) un organe de détection (9) ayant un convertisseur opto-électronique (17) pour former un signal-image ($U_b$),

b) une première source de signal (28) pour générer un premier signal de champ environnant ($U_1$) à partir de la clarté moyenne d'une première zone de champ environnant (28) autour du point-image détecté,

c) un premier étage-formeur de signal (31) pour générer un signal de correction ($U_k$) avec un amplificateur de différence (40) pour former un premier signal de différence ($U_{d1}$) à partir du signal-image ($U_b$) et du premier signal de champ environnant ($U_{u1}$), amplificateur dont les entrées sont reliées à l'organe de détection (9) et à la première source de signal (22) et,

d) un étage de combinaison (33) relié à l'organe de détection (9) et à l'étage-formeur de signal (31) pour former un signal d'image ($U_b$) et un signal de correction ($U_k$), caractérisé par :

e) une seconde source de signal (32) qui forme un second signal de champ environnant ($U_{u2}$) à partir de la clarté moyenne d'une seconde zone de champ environnant (29) plus grande que la première zone de champ environnant (28), autour du point-image détecté, et

f) l'étage-formeur de signal (31) comprend les composants suivants :

$f_1$) un second amplificateur de différence (41) pour former un second signal de différence ($U_{d2}$) à partir du signal-image ($U_b$) et du second signal de champ environnant ($U_{u2}$), amplificateur dont les entrées sont reliées à l'organe de détection (9) et à la seconde source de signal (25),

$f_2$) un étage de mélange (44) pour mélanger le premier et le second signal de différence ($U_{d1}$ ; $U_{d2}$) en fonction d'un premier signal de commande (S) qui détermine le rapport de mélange, qui est appliqué aux amplificateurs de différence (40, 41) et

$f_3$) un générateur de signal de commande (51, 52, 54, 55) qui est relié à l'étage de mélange (44).

14. Montage selon la revendication 13, caractérisé en ce que :

a) l'étage de mélange (44) est suivi par un circuit à seuil (56) pour répartir le signal de mélange ($U_m$) en des composantes de correction positive et négative et les comparer aux signaux de seuil ($U_s$),

b) le circuit de seuil (56) est suivi d'un additionneur (72) pour les composantes de correction et,

c) il est prévu un générateur (62, 65, 66, 68) pour générer les signaux de seuil (U$_s$).

15. Montage selon la revendication 13 ou 14, caractérisé en ce que des amplificateurs (70, 71) sont montés dans les chemins des signaux des composantes de correction pour amplifier différemment les composantes de correction.

16. Montage selon l'une des revendications 13 et 15, caractérisé en ce que l'étage de mélange (44) comprend les éléments suivants :

a) un premier multiplicateur (47) qui est relié au générateur de signal de commande (51, 52, 54, 55) et au premier amplificateur de différence (40),

b) un étage d'inversion (50) qui est relié au générateur de signal de commande,

c) un second multiplicateur (48) qui est relié à l'étage d'inversion (50) et au second amplificateur de différence (41) et,

d) un additionneur (49) qui est relié au premier et au second multiplicateur (47, 48).

17. Montage selon l'une des revendications 13 à 16, caractérisé en ce que le générateur de signal de commande est réalisé comme circuit d'exploitation (52) pour les contours du modèle, et qui reçoit le signal d'image.

18. Montage selon l'une des revendications 13 à 16, caractérisé en ce que le générateur de signal de commande est réalisé sous la forme d'une installation de détection pour un masque de commande (52, 54).

19. Montage selon l'une des revendications 13 à 18, caractérisé en ce que :

a) la première source de signal (22) comporte un premier écran de champ environnant (21) dont l'ouverture de l'écran détermine la première zone du champ environnant et un convertisseur opto-électronique (22) pour obtenir le premier signal de champ environnant, et

b) la seconde source de signal (25) comporte un second écran de champ environnant (24) dont l'ouverture détermine la seconde zone de champ environnant ainsi qu'un autre convertisseur opto-électronique (25) pour obtenir le second signal de champ environnant.

Fig. 1

0 098 319

Fig. 2

A) $U_b$

B) $U_{u1}$

C) $U_{u2}$

D) $U_{d1}$

E) $U_{d2}$

F) $U_b^*$

Fig. 3

2

Fig. 4

Fig. 5

0 098 319